# EUROPEAN PATENT APPLICATION

(11) **EP 0 830 011 A2**
(43) Date of publication of application: **18.03.1998**
(21) Application number: 97202675.1
(22) Date of filing: 01.09.1997
(51) Int. Cl.: H04N 1/387

(54) **A computer program product for selectively displaying an image positioned in a frame**

(30) Priority: 13.09.1996 US 713382
(71) Applicant: EASTMAN KODAK COMPANY, Rochester, New York 14650 (US)
(72) Inventor: Leone, Anthony J., Eastman Kodak Company, Rochester, New York 14650-2201 (US); Hinton, Timothy, Eastman Kodak Company, Rochester, New York 14650-2201 (US)
(74) Representative: Lewandowsky, Klaus, Dipl.-Ing.

(57) **Abstract**

A computer program product, comprising: a computer readable storage medium having a computer program stored thereon for performing the steps of receiving a digital representation of an image; displaying a frame having the digital representation displayed in the frame; and selectively rotating the digital representation of the image within the frame for viewing the image at a desired orientation in the frame.

## Description

### Field of The Invention

The invention relates generally to the field of digital print stations for printing hardcopy photographic prints of an image and, more particularly, to simultaneously printing the image and displaying it in a preselected frame for marketing purposes.

### Background Of The Invention

A digital print station, such as the "KODAK" digital print station (DPS), typically includes a scanner for scanning and digitizing a customer image for ultimately permitting transmission of the digital representation of the image to a computer workstation. The computer workstation includes software for performing a variety of image enhancements on the image. The computer workstation also includes a monitor for displaying software-related information to the user. After such enhancements, the digital representation is sent to a printer for printing a hardcopy of the image.

It is instructive to note that, during the printing, the monitor is temporarily "inactive" or, in other words, is not performing any function critical to the image enhancement. Therefore, it is typical to display a message informing the user of the status of the printing.

Although the presently known and utilized digital print stations are satisfactory, improvements are always desirable. One such improvement is to better utilize such inactive periods.

Consequently, a need exists for means for better utilizing inactive periods.

### Summary Of The Invention

The present invention is directed to overcoming one or more of the problems set forth above. Briefly summarized, according to one aspect of the present invention, the invention resides in a computer program product, comprising: a computer readable storage medium having a computer program stored thereon for performing the steps of: (a) receiving a digital representation of an image; (b) displaying a frame having the digital representation displayed in the frame; and (c) selectively rotating the digital representation of the image and the frame for viewing the image at a desired orientation in the frame.

It is an object of the present invention to provide a DPS having a visual display for marketing additional accessories for photographs while printing the photograph, or during other similar time intervals when the display is not performing a critical function.

It is a feature of the present invention to provide displaying a frame having the digital representation displayed therein.

It is an advantage of the present invention to provide a cost efficient means for marketing such photographic accessories.

These and other aspects, objects, features and advantages of the present invention will be more clearly understood and appreciated from a review of the following detailed description of the preferred embodiments and appended claims, and by reference to the accompanying drawings.

### Brief Description Of The Drawings

Fig. 1 is a diagram illustrating a system for implementing the present invention; and
Fig. 2 is a diagram illustrating a typical frame having an image displayed therein.

### Detailed Description Of The Invention

In the following description, the present invention will be described in the preferred embodiment as a software program. Those skilled in the art will readily recognize that the equivalent of such software may also be constructed in hardware.

As used herein, the computer readable storage medium may comprise, for example; magnetic storage media such as magnetic disc (such a floppy disc) or magnetic tape; optical storage media such as optical disc, optical tape, or machine readable bar code; solid state electronic storage devices such as random access memory (ROM), or read only memory (RAM); or any other physical device or medium employed to store a computer program.

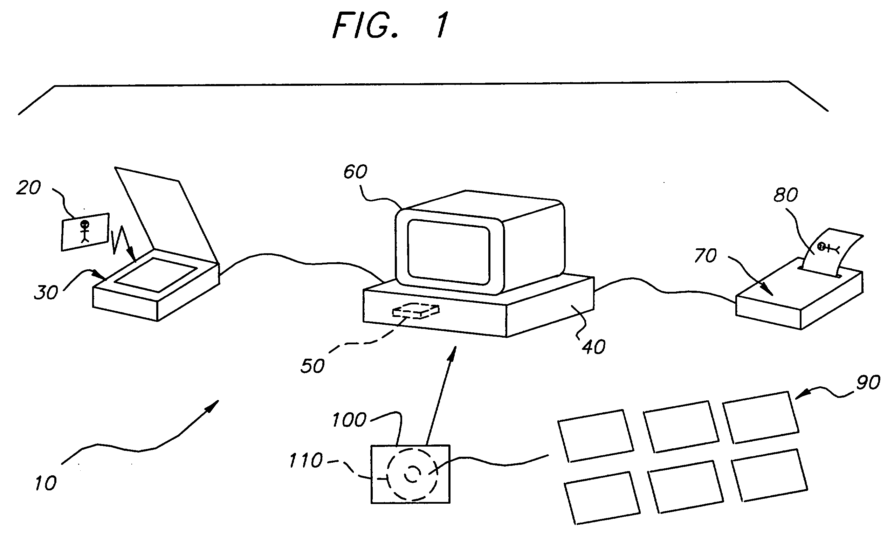

Referring to Fig. 1, there is illustrated a system 10 for receiving and thereafter enhancing images for ultimately permitting the enhanced imaged to be printed. In the preferred embodiment, a photograph or image 20 is placed atop a scanner 30 for converting the image 20 into digital format which is then sent to a microprocessor-based unit 40. The microprocessor-based unit 40 includes memory 50 for storing any well known image manipulation software for permitting image manipulation on the digital representation of the image. A monitor 60 is attached to the microprocessor-based unit 40 for displaying the image during its various stages of enhancement.

The user may select any one or all of a plurality of image manipulation functions for enhancing the digital representation of the image. For printing, the microprocessor-based unit 40 sends the digital representation of the enhanced image to a printer 70 for printing a hardcopy print 80.

It is instructive to note that the microprocessor-based unit 40 includes a plurality of frames 90 that are stored in its memory 50 via a compact disc-read only memory (CD-ROM) 100 or any other similar means. Typically, a disc 110 that contains the frames 90 is inserted into the CD-ROM 100, and the CD-ROM 100 is electrically connected to the microprocessor-based unit during installation of the workstation for transferring the frames 90 from the disc 110 to the memory 50 in digital format. The CD-ROM 100 is disconnected once the frames are installed in memory 50.

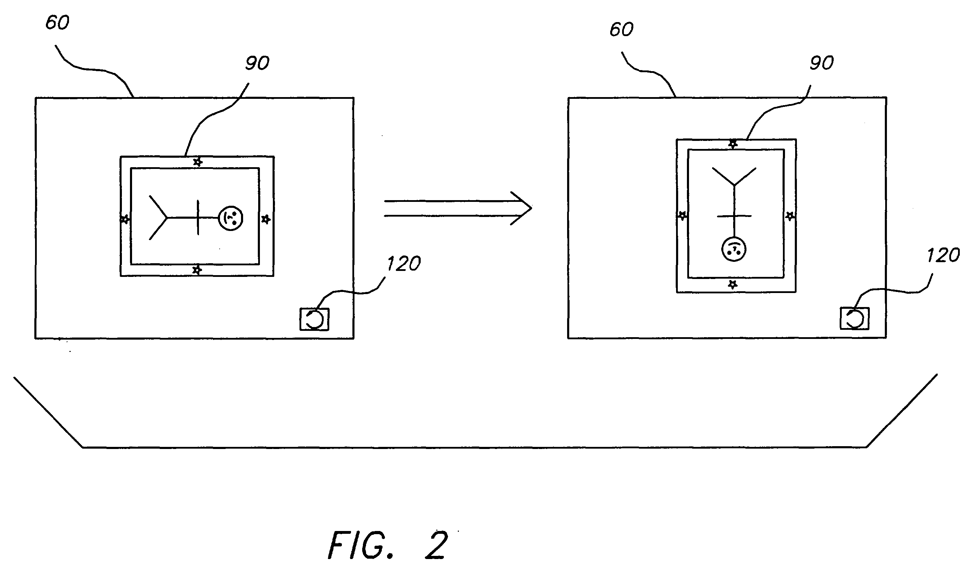

During printing or inactive periods, a software program of the present invention which is stored in memory of the microprocessor-based unit 40 is implemented for displaying the image assembled in one of a plurality of accessories or frames 90. Referring to Fig. 2, a graphical illustration of the software of the present invention is shown. The software is automatically initiated during printing, and randomly selects a frame 90 stored in the memory 50 for display on the monitor 60. The image is then merged into the frame 90 so the customer can visualize the image in an actual frame. An icon 120 is presented in a corner of the monitor 60 which the customer may press for rotating both the image and the frame 90 ninety degrees for permitting visualization of the frame 90 containing the image at a different orientation. The rotation of the image may be repeated by depressing the icon 120, as described above. After a predetermined time period, for example 30 seconds, the frame 90 is automatically replaced with another frame 90 from memory 50; the frame 90 contains the image from the composed image, and the above-described process is repeated with the previously selected orientation of the image being automatically applied to the new frame 90.

The above process is continuously repeated until the printing process is complete at which time the software program of the present invention is ended, and the image enhancement program is again initiated.

The invention has been described with reference to a preferred embodiment. However, it will be appreciated that variations and modifications can be effected by a person of ordinary skill in the art without departing from the scope of the invention.

### Parts List:

- 10: printing system
- 20: image
- 30: scanner
- 40: microprocessor-based unit
- 50: memory
- 60: monitor
- 70: printer
- 80: hardcopy print
- 90: frames
- 100: CD-ROM
- 110: disc
- 120: icon

## Claims

1. A computer program product, comprising: a computer readable storage medium having a computer program stored thereon for performing the steps of:
(a) receiving a digital representation of an image;
(b) displaying a frame having the digital representation displayed in the frame; and
(c) selectively rotating the digital representation of the image and the frame for viewing the image at a desired orientation in the frame.

2. The computer program product as in claim 1 wherein step (c) includes rotating the digital representation at preselected increments in the frame.

3. The computer program product as in claim 2 wherein step (c) rotating the digital representation at ninety degree increments.

4. The computer program product as in claim 1 further comprising providing a plurality of frames from which one is selected for receiving the digital representation of the image.

5. A computer program product, comprising: a computer readable storage medium including program means comprising:
(a) means for receiving a digital representation of an image;
(b) means for displaying a frame having the digital representation displayed in the frame; and
(c) if desired, means for rotating the digital representation of the image within the frame for viewing the image at a desired orientation in the frame.

6. The computer program product as in claim 5 further comprising means for rotating the digital representation at preselected increments in the frame.

7. The computer program product as in claim 6 further comprising means for rotating the digital representation at ninety degree increments.

8. The computer program product as in claim 7 further comprising means for providing plurality of frames from which one is selected for receiving the digital representation of the image.
